# EUROPEAN PATENT SPECIFICATION

(11) **EP 4 336 039 B1**
(45) Date of publication and mention of the grant of the patent: **07.05.2025**
(21) Application number: 23176881.3
(22) Date of filing: 01.06.2023
(51) Int. Cl.: F02P 5/15, F02P 13/00, F02P 15/02, F02P 15/08

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(30) Priority: 08.09.2022 JP 2022142943
(43) Date of publication of application: 13.03.2024
(73) Proprietor: Suzuki Motor Corporation, Hamamatsu-shi, Shizuoka 432-8611 (JP)
(72) Inventor: KOBAYASHI, Kenichiro, Hamamatsu-shi, 432-8611 (JP)
(74) Representative: Plasseraud IP

(56) References cited:
- EP-A1- 4 124 732
- US-A1- 2018 128 157
- US-B1- 11 156 198

## Description

### [Technical Field]

The present invention relates to a control device for an internal combustion engine, and more particularly, relates to a control device for a pre-chamber internal combustion engine including a spark plug in a pre-chamber communicating with a combustion chamber.

### [Background Art]

A pre-chamber internal combustion engine including a spark plug in a pre-chamber disposed on an upper part of a combustion chamber has an advantage in that combustion energy is efficiently converted into pressure, and the thermal efficiency of the engine improves by causing a fuel-air mixture in a main combustion chamber to be rapidly combusted by flames ejected to the main combustion chamber from a communication hole by a configuration of igniting the fuel-air mixture flowing into the pre-chamber through the communication hole in the pre-chamber by a compression stroke. However, there has been a problem in that the combustion state becomes unstable in a specific situation.

For example, the following is disclosed in Patent Literature 1. In a pre-chamber internal combustion engine, in order to deal with a problem of a fuel-air mixture which is not sufficiently mixed flowing into a pre-chamber in an excessively lean state, and causing the combustion to be unstable when fuel injection is performed immediately before an ignition timing so as to suppress preignition, ignition is performed by a spark plug in the pre-chamber when the load of the engine is less than a predetermined value, and fuel is injected at a timing later than a predetermined timing and ignition is performed by a spark plug in a main combustion chamber when the engine load is equal to or greater than the predetermined value. Furthermore, examples of methods and systems for adjusting multiplexed ignition signals in an engine system based on engine operating conditions can be found in Patent Literature 2. Examples of methods and systems for a pre-chamber ignition system can be found in Patent Literature 3. An example of engine system comprising a main spark plug and a sub-spark plug can be found in Patent Literature 4.

### [Citation List]

### [Patent Literature]

[Patent Literature 1] JP 2021-113551 A
[Patent Literature 2] US 11156198 B1
[Patent Literature 3] US 2018/128157 A1
[Patent Literature 4] EP 4124732 A1

### [Summary of Invention]

### [Problems to be Solved by the Invention]

However, the combustion state of the pre-chamber internal combustion engine does not always become unstable in a high load region. Instead, it tends to be more difficult to cause the fuel-air mixture to flow into the pre-chamber in a low load region in which the intake airflow rate decreases. On the other hand, there has been a problem in that the state of the fuel-air mixture flowing into the pre-chamber changes, and the combustion state becomes unstable when the immediately preceding operating point and operational state rapidly change due to the fluctuation of the load, the introduction of an EGR, and the like.

The present invention has been made in view of the points of the related art described above, and an object thereof is to prevent the combustion state from becoming unstable when an operating point fluctuates in a pre-chamber internal combustion engine.

### [Means for Solving the Problems]

To solve the problems described above, the present invention defines a control device for an internal combustion engine according to claim 1.

### [Advantageous Effects of Invention]

By the configuration described above, the control device for an internal combustion engine according to the present invention has an advantage in that the fuel-air mixture of the main combustion chamber can be rapidly combusted by flames ejected to the main combustion chamber from the injection hole, and the thermal efficiency of the engine can be improved by executing the first combustion mode that performs ignition in the pre-chamber in the steady state, and the combustion state can be prevented from becoming unstable after a change in the operating point and the transition by transitioning to the second combustion mode that performs ignition in the combustion chamber when there is a change in the operating point and returning to the first combustion mode after the third combustion mode that performs ignition by both of the first ignition means in the pre-chamber and the second ignition means in the combustion chamber after the operating point transition is completed.

### [Brief Description of Drawings]

[Figure 1] Figure 1 is a schematic cross-sectional view showing a basic configuration of an internal combustion engine.
[Figure 2] Figure 2 is a timing chart showing basic ignition control when an operating point is changed.
[Figure 3] Figure 3 is a timing chart showing control when instability determination is performed when transition is made to a third combustion mode.
[Figure 4] Figure 4 is a timing chart showing control when instability determination is performed when transition is made from the third combustion mode to a first combustion mode.

### [Mode for Carrying Out the Invention]

Hereinafter, an embodiment of the present invention will be described in detail and with reference to the drawings.

### Basic Configuration

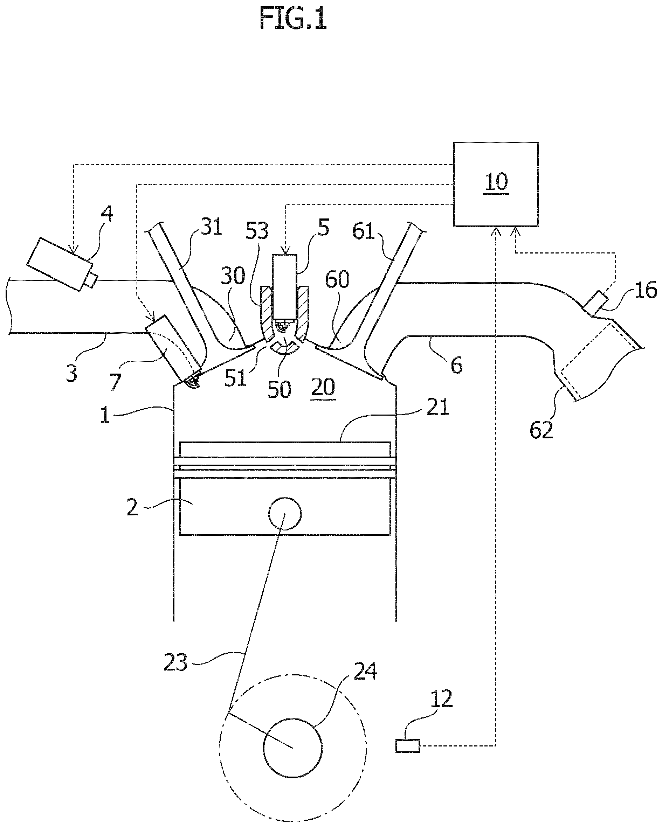

Figure 1 shows a basic configuration of an internal combustion engine in which the present invention is implemented. In Figure 1, the internal combustion engine is a piston reciprocating internal combustion engine including a piston 2 that is housed in a cylinder 1 in a reciprocally slidable manner, the piston 2 is coupled to a crack shaft 24 via a connecting rod 23, and a reciprocating linear motion of the piston 2 is converted into a rotational motion of the crankshaft 24.

A cylinder head that defines a combustion chamber 20 with a crown surface 21 of the piston 2 is disposed on an upper part of a cylinder block configuring the cylinder 1. A cap 53 that defines a pre-chamber 50 is disposed on an upper center part of the combustion chamber 20, and a first spark plug 5 is provided on an upper part of the cap 53.

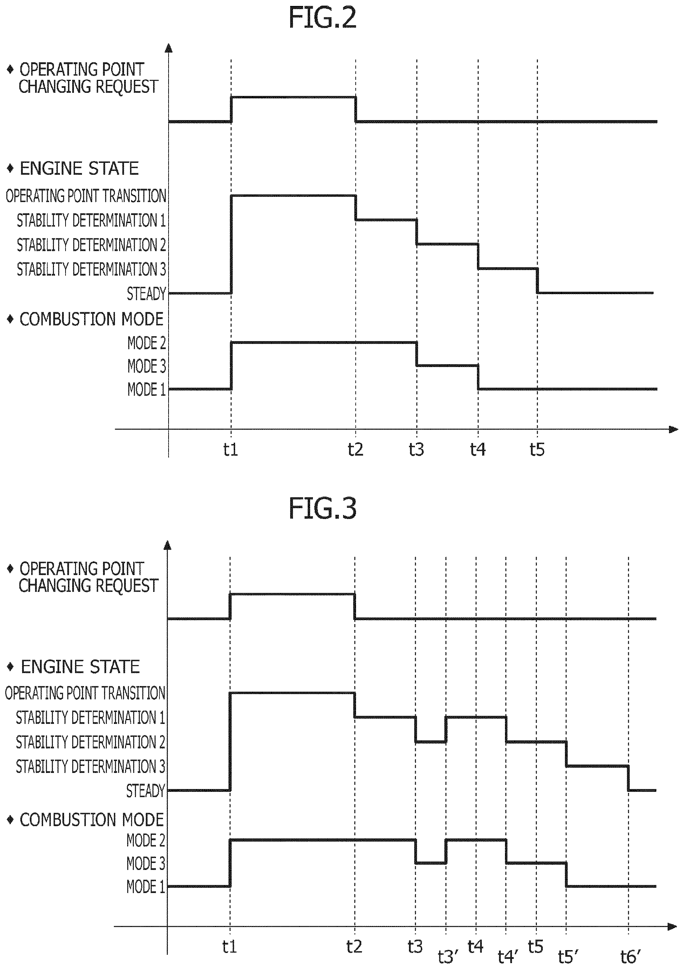

The pre-chamber 50 has a sufficiently small volume as compared to the combustion chamber 20, and communicates with the combustion chamber 20 through a plurality of injection holes 51 penetrating the cap 53. As shown in Figure 2, the injection holes 51 (orifices) are diagonally arranged with an inclination angle with respect to a central axis of the cap 53, and are radially provided in a plurality of locations, for example, six locations in an equiangular arrangement around the central axis.

Furthermore, the cylinder head includes an intake passage 3 communicating with the combustion chamber 20 at an intake port 30 on one side of a ceiling surface, an exhaust passage 6 communicating with the combustion chamber 20 at an exhaust port 60 on the other side of the ceiling surface, an intake valve 31 for opening and closing the intake port 30, and an exhaust valve 61 for opening and closing the exhaust port 60. The intake valve 31 and the exhaust valve 61 can individually control respective opening and closing timings thereof by a variable valve mechanism (not shown).

The cylinder head also includes a fuel injection valve 4 (injector) for injecting fuel into the intake passage 3. The fuel injection valve 4 is diagonally disposed toward the rear surface side of the intake valve 31. Although illustration is omitted, an air cleaner is connected to the upstream side of the intake passage 3 via a surge tank, and an airflow sensor, a throttle valve, an intake air temperature sensor, an intake airflow rate sensor, an intake air pressure sensor, and the like are disposed on the upstream side of the intake passage 3.

On the other hand, an O₂ sensor 16 (or an air-fuel ratio sensor) that detects the oxygen concentration in exhaust gas and an exhaust gas purification device 62 that removes harmful substances contained in the exhaust gas are disposed on the downstream side of the exhaust passage 6. Although illustration is omitted, an EGR passage that circulates a part of the exhaust gas from the exhaust passage 6 to the intake passage 3 is provided, and an EGR cooler and an EGR valve are disposed in the EGR passage, thereby configuring an EGR system. Pumping loss can be reduced by introducing exhaust gas into the intake passage at a partial-load region, and cooling loss can be reduced by reducing the combustion temperature.

As described above, when the immediately preceding operating point and operational state rapidly change due to the fluctuation of the load, the introduction of an EGR, and the like, the state of the fuel-air mixture flowing into the pre-chamber changes, and the combustion state becomes unstable. In particular, in a port-injection pre-chamber internal combustion engine including the fuel injection valve 4 in the intake passage 3, the mixture of the fuel-air mixture is satisfactory. However, when the immediately preceding operating point and operational state change, the fuel-air mixture state (the ratio of air, fuel, and residual gas), the temperature, the pressure in the pre-chamber rapidly change. Thus, there may be cases in which the fuel-air mixture state in the pre-chamber is not stable and the combustion becomes unstable even when compatible values are provided for fuel and ignition in advance.

Thus, the internal combustion engine according to the embodiment of the present invention includes a second spark plug 7 (auxiliary spark plug) facing the combustion chamber 20 besides the first spark plug 5 in the pre-chamber 50. Furthermore, as described below, ignition is performed in the pre-chamber 50 by the first spark plug 5 in a steady state (first combustion mode), and ignition is performed in the combustion chamber 20 by the second spark plug 7 when the operating point is changed (in an operating point transition period) (second combustion mode). As a result, a case in which the combustion state is unstable can be avoided.

As shown in Figure 1, the second spark plug 7 is preferably disposed on the intake port 30 side of the ceiling surface of the combustion chamber 20 (a ceiling surface peripheral part between two intake ports), but also may be arranged on the other side of the ceiling surface, for example, a ceiling surface peripheral part between the intake port 30 and the exhaust port 60.

The internal combustion engine includes a crank angle sensor 12 that detects a crank angle and an engine speed from a timing rotor of the crankshaft 24, a cam angle sensor that distinguishes cylinders, a throttle position sensor, a water temperature sensor that detects the temperature of cooling water, an ambient temperature sensor, an oil temperature sensor, a knocking sensor, and the like and more suitably includes an in-cylinder pressure sensor (combustion pressure sensor) that detects the combustion state of the engine. The detection value of each of the sensors is input to an ECU 10.

The ECU (engine control device) 10 is an electronic control unit (computer) for optimizing the operational state of the engine on the basis of the detection value of each sensor, and includes a CPU that performs arithmetic processing, a ROM that stores therein a control program, setting data, and the like, a RAM that reads out the control program and the setting data and stores therein dynamic data and arithmetic processing results, an input/output I/F, and the like. The ECU 10 performs calculation on the basis of a deviation between a target value based on a driver (accelerator position) and/or output requests (a torque request and an acceleration/deceleration request) from the system and an actual value based on the engine state (the speed, the intake volume, and the air/fuel ratio) and state values such as the intake air temperature and the intake air pressure, determines control instruction values (the throttle position, the fuel injection amount, the ignition timing, and the EGR amount), and optimizes the operational state of the engine.

Then, the ECU 10 determines a change in the operating point of the engine in accordance with the deviation between the target value and the actual value in parallel with the output request (output decrease request) from the driver,
(i) executes the first combustion mode that performs ignition in the pre-chamber 50 by the first spark plug 5 in a steady state in which the deviation is equal to or less than a predetermined deviation,
(ii) transitions to the second combustion mode that performs ignition in the combustion chamber 20 by the second spark plug 7 when it is determined that the operating point is changed, and
(iii) performs control of returning to the first combustion mode after a third combustion mode that performs ignition in both of the first spark plug 5 and the second spark plug 7 when the operating point transition is completed.

As a standard for determining a change in the operating point of the engine, for example, the deviation of the actual engine speed from the target engine speed is monitored, and it is determined that there is an operating point changing request when the deviation of the actual engine speed from the target engine speed exceeds a predetermined value (for example, 100 rpm).

The control of the combustion mode in accordance with a change in the operating point is described below with reference to Figure 2.

### First Combustion Mode

The ECU 10 basically executes the first combustion mode that performs ignition in the pre-chamber 50 by the first spark plug 5 in the steady state in which the deviation between the output request (output decrease request) from the driver and the actual value is less than a predetermined value.

In the first combustion mode, the fuel injected into the intake passage 3 by an intake stroke or an exhaust stroke is mixed with air flowing into the cylinder 1 by the intake stroke and becomes a fuel-air mixture. The fuel-air mixture flowing into the pre-chamber 50 through the injection holes 51 by a compression stroke is ignited in the pre-chamber 50 by the first spark plug 5. The fuel-air mixture in the combustion chamber 20 is rapidly combusted by flames radially ejected into the combustion chamber 20 from the injection holes 51 at high speed, and the operational state of the engine is optimized in a state with excellent thermal efficiency.

### Second Combustion Mode

Transition is made to the second combustion mode that performs ignition in the combustion chamber 20 by the second spark plug 7 when it is determined that there is an operating point changing request in accordance with an output request (output decrease request) from the driver with which the deviation between the output request (output decrease request) and the actual value becomes equal to or greater than a predetermined value at time t1 in Figure 2, for example, during operation in the first combustion mode.

In the second combustion mode, the fuel-air mixture in the combustion chamber 20 is directly ignited by the second spark plug 7 instead of the first spark plug 5. As a result, although the thermal efficiency of the engine is relatively reduced, the combustion state can be prevented from becoming unstable even when the state of the fuel-air mixture in the combustion chamber 20 changes due to a fluctuation in the intake airflow rate or the EGR amount.

In the second combustion mode that performs ignition by the second spark plug 7, the combustion speed is lower and the peak of a heat generation rate is moved to the retarded side as compared to the first combustion mode. Thus, it is preferred that an ignition timing of the second spark plug 7 in the second combustion mode be advanced with respect to an ignition timing by the first spark plug 5 in the first combustion mode.

Then, combustion stability determination 1 of the engine is performed when the engine reaches the target operating point and the deviation between the output request (output decrease request) from the driver and the actual value becomes less than the predetermined value at time t2 in Figure 2. The combustion stability determination is evaluated when the rotational fluctuation during a determination period is within a predetermined value, for example, 100 rpm. Alternatively, evaluation may be performed when a combustion fluctuation rate (COV of IMEP) obtained by the detection value of the in-cylinder pressure sensor is within a predetermined value, for example, 4%. A period that performs the combustion stability determination is not particularly limited, but it is about several cycles to several dozens of cycles.

### Third Combustion Mode

Then, transition is made to the third combustion mode that performs ignition by both of the first spark plug 5 and the second spark plug 7 when the combustion stability determination 1 is completed and it is determined that the combustion in the second combustion mode is in a stable state at time t3 in Figure 2. In other words, the ignition by the second spark plug 7 in the second combustion mode is not immediately stopped, and the ignition by the first spark plug 5 is started in parallel with the ignition by the second spark plug 7. As a result, the combustion state of the engine can be prevented from becoming unstable even when the ignition in the pre-chamber 50 by the first spark plug 5 does not immediately become stable.

In the third combustion mode, there is a need to retard the ignition timing of the second spark plug 7 as compared to the ignition timing of the first spark plug 5, and to cause the second spark plug 7 to be ignited in accordance with a timing at which flames are ejected from the injection holes 51 in the ignition by the first spark plug 5, in other words, prevent the second spark plug 7 from being ignited before flames are ejected by the ignition by the first spark plug 5.

The third combustion mode is a transitional combustion mode. Therefore, when combustion stability determination 2 of the engine is performed at the same time as the transition to the third combustion mode and it is determined that the combustion in the third combustion mode is in a stable state at time t4 in Figure 2, the second spark plug 7 is stopped and transition is made to the first combustion mode that performs ignition in the pre-chamber 50 by the first spark plug 5.

At this time, it is preferred to gradually reduce the discharge energy of the second spark plug 7 and not immediately stop the second spark plug 7. Combustion stability determination 3 of the engine is performed at the same time as the transition to the first combustion mode. When the determination period elapses while the stable state is maintained, the state returns to the steady state at time t5 in Figure 2.

### When Instability Is Determined by Combustion Stability Determination

A case in which the combustion state becomes stable within a predetermined period after the transition is made to each combustion mode has been described in the embodiment described above, but control as follows is executed when the combustion state does not become stable after the transition to each combustion mode.

For example, as shown in Figure 3, when it is determined that the combustion state is unstable at time t3' after transition is made from the second combustion mode to the third combustion mode at the time t3, the third combustion mode is not continued in that state, and the mode returns to the second combustion mode that performs ignition with only the second spark plug 7 in the combustion chamber 20 by stopping the first spark plug 5 of the pre-chamber 50.

The combustion stability determination is continued even after the mode returns to the second combustion mode. When it is determined that the combustion is in a stable state in the second combustion mode at time t4', transition is made to the third combustion mode that performs ignition by both of the first spark plug 5 and the second spark plug 7. Then, when it is determined that the combustion is in a stable state in the third combustion mode at time t5', the second spark plug 7 is stopped, and transition is made to the first combustion mode that performs ignition in the pre-chamber 50 by the first spark plug 5.

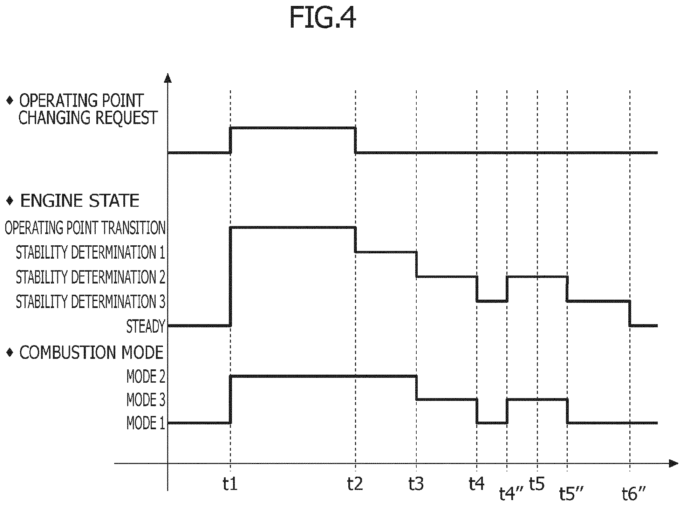

As shown in Figure 4, when it is determined that it is unstable by the combustion stability determination 2 at time t4' after the second spark plug 7 is stopped (the discharge energy is gradually reduced) and transition is made from the second combustion mode to the first combustion mode at the time t4, the mode returns to the third combustion mode that performs ignition by both of the first spark plug 5 in the pre-chamber 50 and the second spark plug 7 in the combustion chamber 20. Then, in a state in which it is determined that the combustion in the third combustion mode is in a stable state at time t5', the second spark plug 7 is stopped (the discharge energy is gradually reduced), and transition is made to the first combustion mode.

The period of the combustion stability determination may be the same for the combustion stability determinations 1 to 3 in each mode, but the determination period of the combustion stability determination 2 in the third combustion mode may be longer than the determination period of the combustion stability determination 1 in the second combustion mode, and the determination period of the combustion stability determination 3 when transition is made to the first combustion mode may be longer than the determination period of the combustion stability determination 2 in the third combustion mode. In other words, it becomes advantageous in terms of reducing the risk of combustion fluctuation and balancing the responsiveness and stabilization of the combustion by causing the period of stability determination to be longer for transitions to the combustion mode that becomes unstable more easily.

### Operation and Effects

As described above, the control device for an internal combustion engine according to the present invention:
(i) can rapidly combust the fuel-air mixture in the combustion chamber 20 by flames radially ejected to the combustion chamber 20 from the injection holes 51, efficiently convert the combustion energy to pressure, and improve the thermal efficiency of the engine by executing the first combustion mode that performs ignition in the pre-chamber 50 by the first spark plug 5 in the steady state. In addition, in the steady state:
(ii) a case in which the combustion state becomes unstable can be avoided by transitioning to the second combustion mode that performs ignition in the combustion chamber 20 by the second spark plug 7 when it is determined that the operating point is changed; and
(iii) the combustion state can be prevented from becoming unstable in a process of returning to the steady state after the operating point transition by executing control for returning to the first combustion mode after the third combustion mode that performs ignition by both of the first spark plug 5 and the second spark plug 7 when the operating point transition is completed.

By control of transitioning to the second combustion mode (evacuation mode) and returning to the first combustion mode (pre-chamber combustion mode, steady state) via the third combustion mode (transition mode) when the operating point changes as described above, there is an advantage in that a reduction in thermal efficiency as the entire operation period can be kept to a minimum, and a knocking reduction effect and an improvement in thermal efficiency in the first combustion mode (pre-chamber combustion mode) can be obtained by avoiding a case in which the combustion state becomes unstable even when temporary reduction in thermal efficiency is caused.

In particular, there is an advantage in that smooth transition to the steady state can be made by passing through the third combustion mode (transition mode, buffer mode) when returning to the first combustion mode (pre-chamber combustion mode, steady state) from the second combustion mode (evacuation mode).

### [Reference Signs List]

- 1: Cylinder
- 2: Piston
- 3: Intake passage
- 4: Fuel injection valve
- 5: First spark plug
- 6: Exhaust passage
- 7: Second spark plug
- 10: ECU (engine control device)
- 12: Crank angle sensor
- 16: O₂ sensor
- 20: Combustion chamber
- 30: Intake port
- 31: Intake valve
- 50: Pre-chamber
- 51: Injection hole
- 60: Exhaust port
- 61: Exhaust valve
- 62: Exhaust gas purification device

## Claims

1. A control device (10) for an internal combustion engine, the internal combustion engine comprising:
a combustion chamber (20) defined between a piston (2) and a cylinder head;
a pre-chamber (50) communicating with an upper center part of the combustion chamber (20) via an injection hole (51);
a fuel injection valve (4) that injects fuel into an intake passage (3) leading to the combustion chamber (20);
first ignition means (5) that faces an inside of the pre-chamber (50); and
second ignition means (7) that faces the combustion chamber (20),
**characterized in that** the control device (10) is configured to perform:
a first combustion mode that performs ignition in the pre-chamber (50) by only the first ignition means (5) in a steady state in which a deviation between a target value for controlling the engine and an actual value is equal to or less than a predetermined value;
transition to a second combustion mode that performs ignition in the combustion chamber (20) by the second ignition means (7) and stops the first ignition means (5) when a change in an operating point is determined as the deviation exceeds the predetermined value during the first combustion mode;
transition to a third combustion mode that performs ignition by both of the first ignition means (5) and the second ignition means (7) when transition of the operating point is completed during the second combustion mode, and it is determined that combustion of the second combustion mode is stable; and
transition to the first combustion mode when it is determined that combustion of the third combustion mode is stable.

2. The control device (10) for an internal combustion engine according to claim 1, wherein:
an ignition timing by the second ignition means (7) in the second combustion mode is advanced as compared to an ignition timing by the first ignition means (5) in the first combustion mode; and
the ignition timing of the second ignition means (7) is retarded compared to the ignition timing by the first ignition means (5) when transition is made from the second combustion mode to the third combustion mode.

3. The control device (10) for an internal combustion engine according to claim 1 or 2, wherein the first ignition means (5) is stopped and returning to the second combustion mode is performed when it is determined that the combustion of the third combustion mode is unstable.

4. The control device (10) for an internal combustion engine according to claim 1 or 2, wherein a discharge energy of the first ignition means (5) is gradually reduced and returning to the second combustion mode is performed when it is determined that the combustion of the third combustion mode is unstable.

5. The control device (10) for an internal combustion engine according to claim 1 or 2, wherein returning to the third combustion mode is performed when it is determined that the combustion is unstable after transition is made from the third combustion mode to the first combustion mode.

6. The control device (10) for an internal combustion engine according to claim 1 or 2, wherein a discharge energy of the second ignition means (7) is gradually reduced and transition is made to the first combustion mode when it is determined that the combustion of the third combustion mode is stable.

7. The control device (10) for an internal combustion engine according to claim 1 or 2, wherein:
a period of determining stability of combustion in the third combustion mode is longer than a period of determining stability of combustion in the second combustion mode; and
a period of determining stability of combustion in the first combustion mode is longer than the period of determining stability of combustion in the third combustion mode.

## Patentansprüche

1. Steuervorrichtung (10) für einen Verbrennungsmotor, wobei der Verbrennungsmotor umfasst:
eine Verbrennungskammer (20), welche zwischen einem Kolben (2) und einem Zylinderkopf definiert ist;
eine Vorkammer (50), welche mit einem oberen Mittelteil der Verbrennungskammer (20) über ein Injektionsloch (51) kommuniziert;
ein Kraftstoffinjektionsventil (4), welches Kraftstoff in eine Eingabepassage (3) injiziert, welche zu der Verbrennungskammer (20) führt;
ein erstes Entzündungsmittel (5), welches einer Innenseite der Vorkammer (50) zugewandt ist; und
ein zweites Entzündungsmittel (7), welches der Verbrennungskammer (20) zugewandt ist,
**dadurch gekennzeichnet, dass** die Steuervorrichtung (10) zu einem Durchführen eingerichtet ist, von:
einem ersten Verbrennungsmodus, welcher eine Entzündung in der Vorkammer (50) nur durch das erste Entzündungsmittel (5) in einem stabilen Zustand durchführt, in welchem eine Abweichung zwischen einem Zielwert für ein Steuern des Motors und einem tatsächlichen Wert gleich oder weniger als ein vorbestimmter Wert ist,
einem Übergang in einen zweiten Verbrennungsmodus, welcher eine Entzündung in der Verbrennungskammer (20) durch das zweite Entzündungsmittel (7) durchführt und das erste Entzündungsmittel (5) stoppt, wenn eine Änderung in einem Betriebspunkt bestimmt ist, wenn die Abweichung den vorbestimmten Wert während des ersten Verbrennungsmodus überschreitet;
einem Übergang in einen dritten Verbrennungsmodus, welcher eine Entzündung sowohl durch das erste Entzündungsmittel (5) als auch das zweite Entzündungsmittel (7) durchführt, wenn ein Übergang des Betriebspunkts während des zweiten Verbrennungsmodus abgeschlossen ist und es bestimmt ist, dass eine Verbrennung des zweiten Verbrennungsmodus stabil ist; und
einem Übergang in den ersten Verbrennungsmodus, wenn es bestimmt ist, dass eine Verbrennung des dritten Verbrennungsmodus stabil ist.

2. Steuervorrichtung (10) für einen Verbrennungsmotor nach Anspruch 1, wobei:
ein Entzündungstiming durch das zweite Entzündungsmittel (7) in dem zweiten Verbrennungsmodus fortgeschritten ist, im Vergleich zu einem Entzündungstiming durch das erste Entzündungsmittel (5) in dem ersten Verbrennungsmodus; und
ein Entzündungstiming des zweiten Entzündungsmittels (7) verspätet ist, im Vergleich zu dem Entzündungstiming durch das erste Entzündungsmittel (5), wenn ein Übergang von dem zweiten Verbrennungsmodus zu dem dritten Verbrennungsmodus gemacht wird.

3. Steuervorrichtung (10) für einen Verbrennungsmotor nach Anspruch 1 oder 2, wobei das erste Entzündungsmittel (5) gestoppt ist und ein Zurückkehren zu dem zweiten Verbrennungsmodus durchgeführt wird, wenn bestimmt ist, dass die Verbrennung des dritten Verbrennungsmodus instabil ist.

4. Steuervorrichtung (10) für einen Verbrennungsmotor nach Anspruch 1 oder 2, wobei eine Entladeenergie des ersten Entzündungsmittels (5) graduell verringert wird und ein Zurückkehren zu dem zweiten Verbrennungsmodus durchgeführt wird, wenn bestimmt ist, dass die Verbrennung des dritten Verbrennungsmodus instabil ist.

5. Steuervorrichtung (10) für einen Verbrennungsmotor nach Anspruch 1 oder 2, wobei ein Zurückkehren zu dem dritten Verbrennungsmodus durchgeführt wird, wenn bestimmt ist, dass die Verbrennung instabil ist, nachdem ein Übergang von dem dritten Verbrennungsmodus zu dem ersten Verbrennungsmodus gemacht ist.

6. Steuervorrichtung (10) für einen Verbrennungsmotor nach Anspruch 1 oder 2, wobei eine Entladeenergie des zweiten Entzündungsmittels (7) graduell verringert wird und ein Übergang zu dem ersten Verbrennungsmodus gemacht wird, wenn es bestimmt ist, dass die Verbrennung des dritten Verbrennungsmodus stabil ist.

7. Steuervorrichtung (10) für einen Verbrennungsmotor nach Anspruch 1 oder 2, wobei:
eine Periode eines Bestimmens einer Stabilität einer Verbrennung in dem dritten Verbrennungsmodus länger als eine Periode eines Bestimmens einer Stabilität einer Verbrennung in dem zweiten Verbrennungsmodus ist; und
eine Periode eines Bestimmens einer Stabilität einer Verbrennung in dem ersten Verbrennungsmodus länger als die Periode eines Bestimmens einer Stabilität einer Verbrennung in dem dritten Verbrennungsmodus ist.

## Revendications

1. Dispositif de commande (10) pour un moteur à combustion interne, le moteur à combustion interne comprenant :
une chambre de combustion (20) définie entre un piston (2) et une culasse ;
une préchambre (50) communiquant avec une partie centrale supérieure de la chambre de combustion (20) par le biais d'un orifice d'injection (51) ;
un injecteur de carburant (4) qui injecte du carburant dans un passage d'admission (3) menant à la chambre de combustion (20) ;
un premier moyen d'allumage (5) qui fait face à un intérieur de la préchambre (50) ; et
un second moyen d'allumage (7) qui fait face à la chambre de combustion (20),
**caractérisé en ce que** le dispositif de commande (10) est configuré pour réaliser :
un premier mode de combustion qui réalise un allumage dans la préchambre (50) uniquement par le premier moyen d'allumage (5) dans un état stable dans lequel un écart entre une valeur cible de commande du moteur et une valeur réelle est égal ou inférieur à une valeur prédéterminée ;
une transition vers un deuxième mode de combustion qui réalise l'allumage dans la chambre de combustion (20) par le second moyen d'allumage (7) et arrête le premier moyen d'allumage (5) lorsqu'un changement d'un point de fonctionnement est déterminé car l'écart dépasse la valeur prédéterminée pendant le premier mode de combustion ;
une transition vers un troisième mode de combustion qui réalise un allumage à la fois par le premier moyen d'allumage (5) et le second moyen d'allumage (7) lorsqu'une transition du point de fonctionnement est terminée pendant le deuxième mode de combustion, et qu'il est déterminé qu'une combustion du deuxième mode de combustion est stable ; et
une transition vers le premier mode de combustion lorsqu'il est déterminé qu'une combustion du troisième mode de combustion est stable.

2. Dispositif de commande (10) pour un moteur à combustion interne selon la revendication 1, dans lequel :
une séquence d'allumage par le second moyen d'allumage (7) dans le deuxième mode de combustion est avancée par rapport à une séquence d'allumage par le premier moyen d'allumage (5) dans le premier mode de combustion ; et
la séquence d'allumage du second moyen d'allumage (7) est retardée par rapport à la séquence d'allumage par le premier moyen d'allumage (5) lorsqu'une transition est réalisée du deuxième mode de combustion au troisième mode de combustion ;

3. Dispositif de commande (10) pour un moteur à combustion interne selon la revendication 1 ou 2, dans lequel le premier moyen d'allumage (5) est arrêté et un retour au deuxième mode de combustion est réalisé lorsqu'il est déterminé que la combustion du troisième mode de combustion est instable.

4. Dispositif de commande (10) pour un moteur à combustion interne selon la revendication 1 ou 2, dans lequel une énergie de décharge du premier moyen d'allumage (5) est progressivement réduite et un retour au deuxième mode de combustion est réalisé lorsqu'il est déterminé que la combustion du troisième mode de combustion est instable.

5. Dispositif de commande (10) pour un moteur à combustion interne selon la revendication 1 ou 2, dans lequel un retour au troisième mode de combustion est réalisé lorsqu'il est déterminé que la combustion est instable après qu'une transition est réalisée du troisième mode de combustion vers le premier mode de combustion.

6. Dispositif de commande (10) pour un moteur à combustion interne selon la revendication 1 ou 2, dans lequel une énergie de décharge du second moyen d'allumage (7) est progressivement réduite et une transition est réalisée vers le premier mode de combustion lorsqu'il est déterminé que la combustion du troisième mode de combustion est stable.

7. Dispositif de commande (10) pour un moteur à combustion interne selon la revendication 1 ou 2, dans lequel :
une période de détermination de la stabilité de combustion dans le troisième mode de combustion est plus longue qu'une période de détermination de la stabilité de combustion dans le deuxième mode de combustion ; et
une période de détermination de la stabilité de combustion dans le premier mode de combustion est plus longue que la période de détermination de la stabilité de combustion dans le troisième mode de combustion.
